# EUROPÄISCHE PATENTSCHRIFT

(11) **EP 0 926 388 B1**
(45) Veröffentlichungstag und Bekanntmachung des Hinweises auf die Patenterteilung: **26.01.2005**
(21) Anmeldenummer: 98122607.9
(22) Anmeldetag: 27.11.1998
(51) Int. Cl.: F16F 15/134, F16F 15/123

(54) **Torsionsschwingungsdämpfer**
Torsional vibration damper
Amortisseur de vibrations torsionelles

(30) Priorität: 23.12.1997 DE 19757556; 23.12.1997 DE 19757562; 28.02.1998 DE 19808560
(43) Veröffentlichungstag der Anmeldung: 30.06.1999
(73) Patentinhaber: Rohs - Voigt Patentverwertungsgesellschaft mbH, 52351 Düren (DE)
(72) Erfinder: Rohs, Ulrich Dr.-Ing., 52351 Düren (DE); Rohs, Hans, 52351 Düren (DE); Heidingsfeld, Dietmar, Dipl.-Ing., 52078 Aachen (DE)
(74) Vertreter: Castell, Klaus, Dr.

(56) Entgegenhaltungen:
- US-A- 4 470 494
- US-A- 5 377 560
- PATENT ABSTRACTS OF JAPAN vol. 014, no. 575 (M-1062), 20. Dezember 1990 (1990-12-20) -& JP 02 248752 A (DAIKIN MFG CO LTD), 4. Oktober 1990 (1990-10-04)

## Beschreibung

Die Erfindung betrifft einen Torsionsschwingungsdämpfer mit zwei gegeneinander drehbeweglichen Baugruppen, die über eine wenigstens einen Schubkolben umfassende Federanordnung miteinander wirkverbunden sind, wobei wenigstens bei bestimmten Drehwinkeln der beiden Baugruppen zueinander der Kraftfluß zwischen dem Schubkolben der Federanordnung und zumindest der zweiten Baugruppe über eine an dem Schubkolben angreifende Mantelfläche erfolgt.

Ein derartiger Torsionsschwingungsdämpfer ist zum Beispiel aus der DE 195 44 832 A1 bekannt. Bei diesem Torsionsschwingungsdämpfer übergreift eine Antriebsscheibe eine Abtriebsscheibe und weist an der Innenseite des übergreifenden Teiles über den Umfang verteilte, radiale Taschen auf, deren Mantelfläche zu ihren Umfangsenden hin leicht keilförmig auf die Antriebsscheibe zuläuft. Die Mantelfläche der Abtriebsscheibe ist im Querschnitt polygonal, und es sind in den Taschen der Antriebsscheibe Paare keilförmiger Schubkolben angeordnet, die gegeneinander durch Druckfedern auseinander gehalten sind. Von der Antriebsscheibe ausgehend fließt somit die Kraft über die Schubkolben und deren Druckfedern zu der polygonalen Mantelfläche der Abtriebsscheibe.

Die US 5,377,560 zeigt als nächtliegenden Stand der Technik darüber hinaus einen Torsionsschwingungsdämpfer mit zwei gegeneinander drehbeweglichen Baugruppen, die über eine wenigstens einen Schubkolben umfassenden Federanordnung miteinander wirkverbunden sind, wobei wenigstens bei bestimmten Drehwinkeln der beiden Baugruppen zueinander der Kraftfluss zwischen dem Schubkolben der Federanordnung und zumindest der zweiten Baugruppe über eine an dem Schubkolben angreifende Mantelfläche erfolgt, wobei die Mantelfläche auf einer separaten Baugruppe ausgeformt ist, die relativ zur zweiten Baugruppe über Federelemente federnd angeordnet ist.

Es ist Aufgabe vorliegender Erfindung, einen Torsionsschwingungsdämpferbereit zu stellen, dessen Charakteristik besser angepasst werden kann.

Als Lösung wird ein Torsionsschwingungsdämpfer mit den Merkmalen von Anspruch 1 vorgeschlagen.

Durch eine derartige Anordnung wird in vorteilhafter Weise eine zusätzliche Entkopplung zwischen erster und zweiter Baugruppe vorgesehen. Insbesondere kann die Federung zwischen separater Baugruppe und zweiter Baugruppe gewünschten Verhältnissen angepaßt werden, so daß die Feder-Charakteristik des erfindungsgemäßen Torsionsschwingungsdämpfers in größerem Maße variiert und den gewünschten Erfordernissen angepaßt werden kann, als dieses bei bisher bekannten Torsionsschwingungsdämpfern möglich ist. Es versteht sich, daß vorliegende Erfindung mit allen bekannten, für Torsionsschwingungsdämpfer anwendbaren Dämpfungsmitteln, wie Reib- oder Schleppringen und ähnlichem versehen sein kann, so daß folglich auch in entsprechender Weise die Charakteristik des Torsionschwingungsdämpfgers variiert bzw. angepaßt werden kann.

Es versteht sich, daß die Richtung des Kraftflusses bei vorliegender Erfindung nicht von essentieller Bedeutung ist. Insofern kann die zweite Baugruppe sowohl Antriebs- als auch Abtriebsglied sein. Ist die zweite Baugruppe als Abtriebsglied ausgestaltet, kann vorliegende Erfindung unmittelbar bei aus dem Stand der Technik bekannten Torsionsschwingungsdämpfern Anwendung finden. Insbesondere kann die zweite Baugruppe als Kupplungsflansch ausgestaltet bzw. mit einem Kupplungsflansch verbunden sein.

Insbesondere wenn der Torsionsschwingungsdämpfer in Verbindung mit einer Kupplung Anwendung findet, bedingt die separate Baugruppe eine vorteilhaft erhöhte Wärmeisolation zwischen den beiden Baugruppen.

Es versteht sich, daß vorliegende Erfindung nicht auf polygonale Mantelflächen beschränkt ist. Vielmehr können alle Mantelflächen vorteilhaft zur Anwendung kommen, die derart ausgestaltet sind, daß sich bei einer Verdrehung der beiden gegeneinander drehbeweglichen Baugruppen gegeneinander ein senkrecht zur Verdrehrichtung liegender Abstand zwischen diesen beiden Baugruppen verringert und diese Verringerung eine Kompression einer Federanordnung bedingt. Ebenso versteht es sich, daß bei vorliegender Erfindung jede Federanordnung, insbesondere auch jegliche federnden Materialien und deren Formgebung vorteilhaft Verwendung finden kann.

Eine federnde Verbindung der separaten Baugruppe kann in besonders einfacher, aber dennoch ausreichend stabiler Weise dadurch geschehen, daß die separate Baugruppe einen im wesentlichen L-förmigen Querschnitt aufweist und daß der eine Schenkel die Mantelfläche umfaßt, während der andere Schenkel an der zweiten Baugruppe befestigt ist. Als Befestigung bzw. Verbindungsmittel zwischen separater Baugruppe und zweiter Baugruppe können alle geeigneten Befestigungsmittel, wie zum Beispiel Schrauben, Nieten bzw. Befestigungsarten, wie Verschweißungen, Verklebungen und ähnliches dienen. Insbesondere ist es vorteilhaft, wenn die Befestigung der separaten Baugruppe am äußeren Ende des zweiten Schenkels erfolgt. Auf diese Weise kann der zweite Schenkel als federndes Element zwischen Mantelfläche und Befestigung bzw. zweiter Baugruppe dienen. Die separate Baugruppe weist zwischen einer Befestigung an der zweiten Baugruppe und Mantelfläche eine Materialschwächung auf. Jede Materialschwächung, die geeignet ist, die federnden Eigenschaften der seperate Baugruppe in geeigneter Weise zu verändern, ist hierfür geeignet. Insbesondere eignet sich ein Materialabtrag bzw. eine Ausnehmung, um eine derartige Materialschwächung vorzusehen. Eine derartige Anordnung ermöglicht eine besonders einfache Herstellung der erfindungsgemäßen separaten Baugruppe, da sie einstückig hergestellt werden kann. Das Vorsehen einer separaten Baugruppe, die mit einer geeigneten, die federnden Eigenschaften der separaten Baugruppe verändernden Materialschwächung versehen ist, ist eine der vorliegenden Erfindung zugrundeliegende Idee. Diese Grundidee kann auch bei anderen Torsionsschwingungsdämpfern, insbesondere bei Torsionsschwingungsdämpfern, bei welchen der Kraftfluß nicht über eine polygonale Mantelfläche erfolgt, vorteilhaft Verwendung finden.

Eine im wesentlichen ringförmige Ausgestaltung der separaten Baugruppe bedingt eine hohe Stabilität derselben. Hierbei versteht es sich, daß vorteilhafter Weise diese Ringform der polygonen Mantelfläche angepaßt ist. Insbesondere kann der Ring einen Schenkel mit der im wesentlichen polygonalen Mantelfläche und einen an der zweiten Baugruppe befestigten Schenkel umfassen und zwischen Mantelfläche und Befestigung wenigstens eine Ausnehmung aufweisen. Diese Ausnehmung dient als Materialschwächung und der an der zweiten Baugruppe befestigte Schenkel kann als Federelement dienen. Als vorteilhaft, weil stabil, erweist sich eine rechtwinklige Anordnung dieser beiden Schenkel.

Andererseits kann vorliegende Erfindung auch derart realisiert werden, daß die im wesentlichen polygonale Mantelfläche mit der zweiten Baugruppe über wenigstens einen Steg verbunden ist. Dieser Steg dient bei einer derartigen Anordnung als erfindungsgemäßes Federelement. Auch in diesem Falle ist es vorteilhaft, wenn der Steg im wesentlichen rechtwinklig von der Mantelfläche absteht.

Die Mantelfläche kann sich im wesentlichen parallel zur Rotationsachse und der Steg kann sich im wesentlichen radial erstrecken. Hierdurch bedingen sich besonders günstige Kräfteverhältnisse für den erfindungsgemäßen Torsionsschwingungsdämpfer, da aufgrund der radialen Oberflächenkomponente, wenn überhaupt, nur sehr geringe axiale Kräfte in dem Torsionsschwingungsdämpfer auftreten.

Eine besonders einfache Herstellung der separaten Baugruppe folgt, wenn die Mantelfläche auf einem Ring ausgeformt ist, der einstückig mit dem Steg verbunden ist. Es versteht sich, daß mehrere Stege vorgesehen sein können. Insbesondere ist es vorteilhaft, wenn Zahl und Anordnung dieser Stege der Form der Mantelfläche entsprechen, da hierdurch eine gleichmäßige Kräfteverteilung und somit eine erhöhte Gesamtstabilität der erfindungsgemäßen Anordnung bedingt ist.

Die erfindungsgemäßen Materialschwächungen, Schenkel, Stege und Befestigungsmittel, wie Schrauben, Nieten bzw. punktförmige Befestigungsarten, reduzieren desweiteren in vorteilhafter Weise den Wärmeübergang zwischen den beiden gegeneinander drehbeweglichen Baugruppen. Aus diesem Grunde ist ein erfindungsgemäßer Torsionsschwingungsdämpfer besonders vorteilhaft im Zusammenhang mit Kupplungen zu verwenden.

Weitere Vorteile, Ziele und Eigenschaften vorliegender Erfindung finden sich in nachfolgender Beschreibung anliegender Zeichnung, in welcher beispielhaft ein erfindungsgemäßerTorsionsschwingungsdämpfer dargestellt ist. In der Zeichnung zeigen,
- Figur 1: einen Torsionsschwingungsdämpfer im Schnitt entlang der Linie A-B nach Figur 2,
- Figur 2: den Torsionsschwingungsdämpfer nach Figur 1 im Querschnitt.

Der beispielhaft dargestellte Torsionsschwingungsdämpfer umfaßt eine erste Baugruppe 1 und eine zweite Baugruppe 2, die über ein Lager 10 gegeneinander drehbeweglich angeordnet sind. Die beiden Baugruppen 1 und 2 sind über eine Federanordnung 7 wirkverbunden, die aus umfangsverteilt angeordneten, tangential wirksamen Federn 70 besteht, welche an ihren Enden jeweils in bekannter Weise Schubkolben 71 auseinander halten.

Der Torsionsschwingungsdämpfer weist desweiteren eine separate Baugruppe 3 auf, die über eine polygonale Mantelfläche an den Schubkolben anliegt. Diese separate Baugruppe 3 weist einen im wesentlichen L-förmigen Querschnitt auf. Ein erster Schenkel 3' dieser Baugruppe 3 umfaßt die Mantelfläche 4, während ein zweiter Schenkel 3'' rechtwinklig von dem ersten Schenkel 3' absteht und mittels Befestigungen 5, nämlich mittels Nietverbindungen, mit der zweiten Baugruppe 2 verbunden ist.

Der zweite Schenkel 3'' weist Stege 30 auf, die voneinander durch Ausnehmungen 31 beabstandet sind und in Zahl und Anordnung der Symmetrie der Mantelfläche 4 entsprechen.

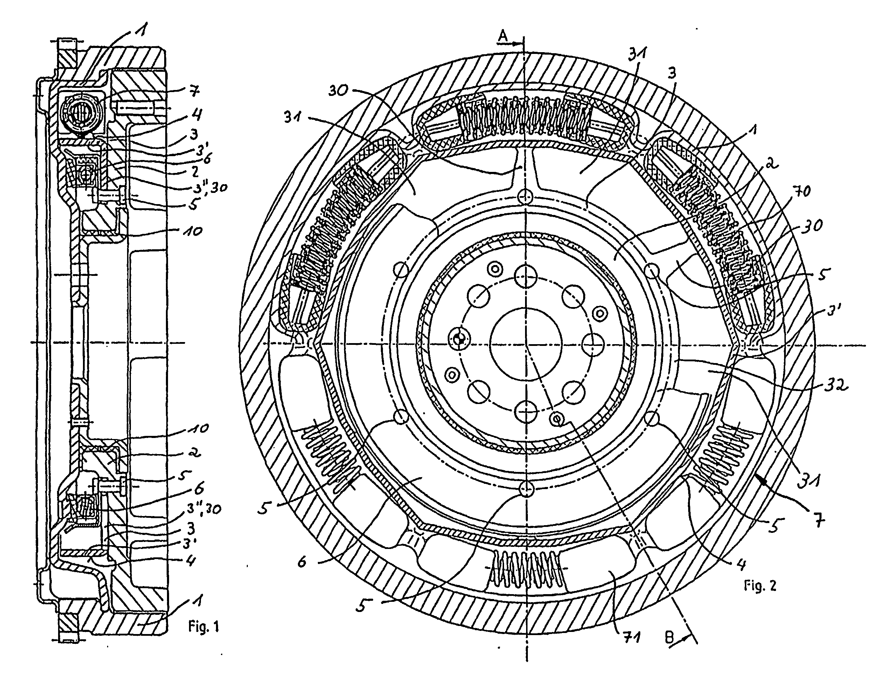

Wie insbesondere aus Figur 2 ersichtlich, erfolgt die Befestigung der separaten Baugruppe 3 am äußeren Ende des zweiten Schenkels 3'', wobei das äußere Ende des zweiten Schenkels 3'' aus Stabilitätsgründen als Befestigungsring 32 ausgestaltet ist.

Eine weitere Dämpfung des Torsionsschwingungsdämpfers erfolgt durch ein als Schleppring ausgestaltetes Reibelement 6.

## Patentansprüche

1. Torsionsschwingungsdämpfer mit zwei gegeneinander drehbeweglichen Baugruppen (1, 2), die über eine wenigstens einen Schubkolben (71) umfassende Federanordnung (7) miteinander wirkverbunden sind, wobei wenigstens bei bestimmten Drehwinkeln der beiden Baugruppen (1, 2) zueinander der Kraftschluss zwischen dem Schubkolben (71) der Federanordnung und zumindest der zweiten Baugruppe (2) über eine an dem Schubkolben (71) angreifende Mantelfläche erfolgt, wobei die Mantelfläche (4), die relativ zur zweiten Baugruppe (2) federnd angeordnet ist, auf einer separaten Baugruppe (3) ausgeformt ist, ***dadurch gekennzeichnet, dass*** die separate Baugruppe (3) mit einer Befestigung (5) an der zweiten Baugruppe (2) befestigt ist und zwischen der Befestigung (5) und der Mantelfläche (4) eine Materialschwächung aufweist.

2. Torsionsschwingungsdämpfer nach Anspruch 1, ***dadurch gekennzeichnet, daß*** die Mantelfläche (4) relativ zur zweiten Baugruppe (2) in Umfangsrichtung federnd angeordnet ist.

3. Torsionsschwingungsdämpfer nach Anspruch 1 oder 2, ***dadurch gekennzeichnet, daß*** die separate Baugruppe (3) einen im wesentlichen L-förmigen Querschnitt mit zwei Schenkeln (3', 3") aufweist und daß der erste Schenkel (3') die Mantelfläche (4) umfaßt, während der zweite Schenkel (3'') an der zweiten Baugruppe (2) befestigt ist.

4. Torsionsschwingungsdämpfer nach Anspruch 3, ***dadurch gekennzeichnet, daß*** die Befestigung am äußeren Ende (32) des zweiten Schenkels (3'') erfolgt.

5. Torsionsschwingungsdämpfer nach einem der Ansprüche 1 bis 4, ***dadurch gekennzeichnet, daß*** die separate Baugruppe (3) im wesentlichen ringförmig ausgestaltet ist.

6. Torsionsschwingungsdämpfer nach Anspruch 5, ***dadurch gekennzeichnet, daß*** der Ring einen Schenkel (3') mit der Mantelfläche (4) und einen an der zweiten Baugruppe (2) befestigten Schenkel (3'') umfaßt und daß der Ring zwischen Mantelfläche (4) und Befestigung (5) wenigstens eine Ausnehmung (31) aufweist.

7. Torsionsschwingungsdämpfer nach einem der Ansprüche 1 bis 6, ***dadurch gekennzeichnet, daß*** die Mantelfläche (4) mit der zweiten Baugruppe (2) über wenigstens einen Steg (30) verbunden ist.

8. Torsionsschwingungsdämpfer nach Anspruch 7, ***dadurch gekennzeichnet, daß*** der Steg (30) im wesentlichen rechtwinklig von der Mantelfläche (4) absteht.

9. Torsionsschwingungsdämpfer nach Anspruch 7 oder 8 ***dadurch gekennzeichnet, daß*** die Mantelfläche (4) sich im wesentlichen parallel zur Rotationsachse und der Steg (30) sich im wesentlichen radial erstreckt.

10. Torsionsschwingungsdämpfer nach einem der Ansprüche 7 bis 9, ***dadurch gekennzeichnet, daß*** die Mantelfläche (4) auf einem Ring ausgeformt ist, der einstückig mit dem Steg (30) verbunden ist.

11. Torsionsschwingungsdämpfer nach einem der Ansprüche 7 bis 10, ***dadurch gekennzeichnet, daß*** er mehrere Stege (30) aufweist, deren Zahl und Anordnung der Form der Mantelfläche (4) entsprechen.

## Claims

1. A torsional vibration damper having two structural components (1, 2) that are rotatable relative to each other and are work-connected with each other by a spring arrangement (7) including at least one pusher piston (71), the frictional connection between the pusher piston (71) of the spring arrangement and at least the second structural component (2) taking place through a sheathing surface acting on the pusher piston (71) at least at determined rotation angles of the two structural components (1, 2) relative to each other, the sheathing surface (4) that is disposed springable relative to the second structural component (2) being formed on a separate structural component (3), ***characterized in that*** the separate structural component (3) is secured by a fixing device (5) on the second structural component (2) and that the material is reduced between the fixing device (5) and the sheathing surface (4).

2. The torsional vibration damper according to claim 1, ***characterized in that*** the sheathing surface (4) is disposed springable relative to the second structural component (2) in the direction of the circumference.

3. The torsional vibration damper according to claim 1 or 2, ***characterized in that*** the separate structural component (3) comprises a substantially L-shaped cross-section with two legs (3', 3") and that the first leg (3') includes the sheathing surface (4) ,whereas the second leg (3 ") is secured to the second structural component (2).

4. The torsional vibration damper according to claim 3, ***characterized in that*** the securing takes place on the outer end (32) of the second leg (3").

5. The torsional vibration damper according to one of the claims 1 to 4, ***characterized in that*** the separate structural component (3) is substantially configured in the shape of a ring.

6. The torsional vibration damper according to claim 5, ***characterized in that*** the ring includes a leg (3') with the sheathing surface (4) and a leg (3 ") secured to the second structural component (2) and that the ring comprises at least one recess (31) between the sheathing surface (4) and the fixing device (5).

7. The torsional vibration damper according to one of the claims 1 to 6, ***characterized in that** the* sheathing surface (4) is connected to the second structural component (2) by at least one cross-piece (30).

8. The torsional vibration damper according to claim 7, ***characterized in that*** the cross piece (30) protrudes substantially perpendicularly from the sheathing surface (4).

9. The torsional vibration damper according to claim 7 or 8, ***characterized in that*** the sheathing surface (4) extends substantially parallel to the rotational axis and that the cross piece (30) extends substantially radially.

10. The torsional vibration damper according to one of the claims 7 to 9, ***characterized in that*** the sheathing surface (4) is formed on a ring that is integrally connected with the cross piece (30).

11. The torsional vibration damper according to one of the claims 7 to 10, ***characterized in that*** it comprises a plurality of cross pieces (30), the number and arrangement of which corresponds to the shape of the sheathing surface (4).

## Revendications

1. Amortisseur de vibrations de torsion avec deux sous-ensembles (1, 2) montés mobile en rotation l'un par rapport à l'autre et agissant conjointement par l'intermédiaire d'un arrangement de ressorts (7) comprenant au moins un poussoir (71), l'adhérence entre le poussoir (71) de l'arrangement de ressorts et le deuxième sous-ensemble (2) au moins se faisant, du moins à certains angles de rotation des deux sous-ensembles (1, 2) l'un par rapport à l'autre, par l'intermédiaire d'une enveloppe agissant sur le poussoir (71), l'enveloppe (4), qui est disposée de façon amortissante par rapport au deuxième sous-ensemble (2) étant formée sur un sous-ensemble séparé (3), ***caractérisé en ce que*** le sous-ensemble séparé (3) est fixé sur le deuxième sous-ensemble (2) au moyen d'une fixation (5) et qu'il comporte un affaiblissement de la matière entre la fixation (5) et l'enveloppe (4)

2. Amortisseur de vibrations de torsion selon la revendication 1, ***caractérisé en ce que*** l'enveloppe (4) est disposée en direction circonférentielle de façon amortissante par rapport au deuxième sous-ensemble (2).

3. Amortisseur de vibrations de torsion selon la revendication 1 ou 2, ***caractérisé en ce que*** le sous-ensemble séparé (3) comporte une section sensiblement en L avec deux branches (3', 3") et que la première branche (3') comprend l'enveloppe (4) tandis que la deuxième branche (3 ") est fixée au deuxième sous-ensemble (2).

4. Amortisseur de vibrations de torsion selon la revendication 3, ***caractérisé en ce que*** la fixation se fait à l'extrémité distale (32) de la deuxième branche (3").

5. Amortisseur de vibrations de torsion selon l'une quelconque des revendications 1 à 4, ***caractérisé en ce que*** le sous-ensemble séparé (3) est sensiblement conçu en forme d'anneau.

6. Amortisseur de vibrations de torsion selon la revendication 5, ***caractérisé en ce que*** l'anneau comprend une branche (3') avec l'enveloppe (4) et une branche (3") fixée au deuxième sous-ensemble (2) et que l'anneau comporte au moins un évidement (31) entre l'enveloppe (4) et la fixation (5).

7. Amortisseur de vibrations de torsion selon l'une quelconque des revendications 1 à 6, ***caractérisé en ce que*** l'enveloppe (4) est reliée au deuxième sous-ensemble (2) par l'intermédiaire d'au moins une entretoise (30).

8. Amortisseur de vibrations de torsion selon la revendication 7, ***caractérisé en ce que*** l'entretoise (30) fait saillie sensiblement perpendiculairement à l'enveloppe (4).

9. Amortisseur de vibrations de torsion selon la revendication 7 ou 8, ***caractérisé en ce que*** l'enveloppe (4) s'étend sensiblement parallèlement à l'axe de rotation et que l'entretoise (30) s'étend sensiblement radialement.

10. Amortisseur de vibrations de torsion selon l'une quelconque des revendication 7 à 9, ***caractérisé en ce que*** l'enveloppe (4) est formée sur un anneau qui est rendu solidaire de l'entretoise (30).

11. Amortisseur de vibrations de torsion selon l'une quelconque des revendications 7 à 10, ***caractérisé en ce qu'***il comprend plusieurs entretoises (30) dont le nombre et l'arrangement correspondent à la forme de l'enveloppe (4).
